# EUROPÄISCHE PATENTSCHRIFT

(11) **EP 3 047 168 B1**
(45) Veröffentlichungstag und Bekanntmachung des Hinweises auf die Patenterteilung: **26.07.2017**
(21) Anmeldenummer: 14752781.6
(22) Anmeldetag: 11.08.2014
(51) Int. Cl.: F16C 41/04, B65G 57/00, B65G 1/14

(54) **STAPELHILFE FÜR RINGE MIT UNTERSCHIEDLICHEM DURCHMESSER SOWIE VERFAHREN ZUM STAPELN VON GROSSWÄLZLAGERRINGEN**
STACKING AID FOR RINGS OF DIFFERENT DIAMETERS AND METHOD FOR STACKING BEARING RINGS FOR LARGE-SIZE ROLLING BEARINGS
MOYEN D'EMPILAGE POUR DES BAGUES AVEC DIAMÈTRES DIFFÉRENTES ET PROCÉDÉ D'EMPILAGE DES BAGUES POUR GRANDS PALIERS DE ROULEMENT

(30) Priorität: 17.09.2013 DE 102013110244
(43) Veröffentlichungstag der Anmeldung: 27.07.2016
(73) Patentinhaber: thyssenkrupp Rothe Erde GmbH, 44137 Dortmund (DE)
(72) Erfinder: KRONE, Achim, 59597 Erwitte (DE); WEBER, Peter, 59556 Lippstadt (DE)
(74) Vertreter: thyssenkrupp Intellectual Property GmbH
(86) Internationale Anmeldenummer: PCT/EP2014/002200
(87) Internationale Veröffentlichungsnummer: WO 2015/039719

(56) Entgegenhaltungen:
- DE-U- 1 899 221
- JP-A- H08 175 580
- US-A- 3 696 490

## Beschreibung

Die vorliegende Erfindung betrifft eine Stapelhilfe für Ringe mit unterschiedlichen Durchmessern. Bei den Ringen mit unterschiedlichen Durchmessern kann es sich insbesondere um Ringe von Großwälzlagern handeln, welche übereinander gestapelt gelagert oder transportiert werden sollen.

Insbesondere kann es notwendig sein, den Innenring sowie den Außenring eines Großwälzlagers getrennt voneinander zu transportieren und erst nachfolgend unter Einführung der Wälzkörper zu montieren. Im Rahmen einer solchen Ausgestaltung entspricht dann der Außendurchmesser des Innenringes in etwa dem Innendurchmesser des Außenringes, wobei aber üblicherweise zwischen Innenring und Außenring in radialer Richtung noch ein Bewegungsspalt verbleibt.

Um große und schwere Ringe unterschiedlicher Größe, insbesondere Ringe von Großwälzlagern zu stapeln, werden in der Praxis einfache Holzbohlen eingesetzt. Ohne zusätzliche, aufwendige Sicherungsmaßnahmen wie Spanngurten oder dergleichen ist diese Art des Übereinanderstapelns nicht rutschsicher und somit eine Gefahren- und Unfallquelle.

Um montierte Kegelrollenlager übereinander stapeln zu können, ist aus der DE 1 899 221 U bekannt, an einer Stirnfläche eine Erhöhung vorzusehen, welche bei einem Übereinanderstapeln eine Zentrierung an dem Innenring des nächsten, an der Stirnfläche anliegenden Wälzlagers bewirkt. Eine Zentrierung durch entsprechende Ausformungen an der Stirnfläche ist für Ringe mit unterschiedlichem Durchmesser nicht geeignet und auch konstruktiv nachteilig, da der Vorsprung als integraler Bestandteil des Wälzlagers gefertigt werden muss und auch bei bestimmten Einbausituationen hinderlich ist.

Um ringförmige Erzeugnisse übereinander stapeln zu können, ist gemäß der DE 1 944 471 eine Verpackung vorgesehen, bei der ringförmige Erzeugnisse in die Nut eines Schutzmaterials eingelegt werden. Es ergibt sich der Nachteil, dass sehr große Mengen an Schutzmaterial zur Sicherung der ringförmigen Erzeugnisse notwendig sind, wobei auch das Einlegen der ringförmigen Erzeugnisse in die Nut und das Übereinanderstapeln aufwendig ist.

Vor diesem Hintergrund liegt der vorliegenden Erfindung die Aufgabe zugrunde, eine Stapelhilfe anzugeben, die es erlaubt, Ringe mit unterschiedlichem Durchmesser einfach aber gleichzeitig sicher übereinander zu stapeln. Die Stapelhilfe soll insbesondere auch so ausgestaltet sein, dass diese bei dem Transportieren und den dabei üblicherweise wirkenden Kräften eine Fixierung und damit eine Sicherung der Ringe aneinander bewirkt. Des Weiteren soll ein Verfahren zum Stapeln von Großwälzlagerringen mit mehreren der Stapelhilfen angegeben werden.

Gegenstand der Erfindung und Lösung der Aufgabe sind eine Stapelhilfe gemäß Patentanspruch 1 sowie Verfahren zum Stapeln von Großwälzlagerringen gemäß Patentanspruch 10 und Patentanspruch 11.

Erfindungsgemäß wird eine Stapelhilfe für Ringe mit unterschiedlichen Durchmessern bereitgestellt, die eine sich in einer Längsrichtung erstreckende Grundplatte, eine erste Anschlagplatte, die von einer ersten Seite der Grundplatte absteht, und eine zweite Anschlagplatte, die von einer der ersten Seite gegenüberliegenden zweiten Seite der Grundplatte absteht, aufweist. Die Grundplatte bildet mit der ersten Anschlagplatte einen ersten Anlagewinkel für einen ersten Ring und mit der zweiten Anschlagplatte einen zweiten Anlagewinkel für einen zweiten Ring. Die Anlagewinkel sind an der Grundplatte diagonal gegenüberliegend angeordnet. Das heißt, der erste Anlagewinkel erstreckt sich in Längsrichtung gesehen von einem Ende der Grundplatte bis zu einem Mittelabschnitt der Grundplatte, wobei sich der andere Anlagewinkel von dem anderen Ende der Grundplatte an der gegenüberliegenden Seite bis zu dem Mittelabschnitt erstreckt. Dabei sind auch Ausgestaltungen mit umfasst, bei denen in Längsrichtung gesehen an dem Mittelabschnitt eine Überlappung oder ein Abstand zwischen den beiden Anlagewinkeln vorhanden ist. Die diagonal gegenüberliegende Anordnung der Anlagewinkel ergibt sich aus der Erfordernis, Ringe mit unterschiedlichen Durchmessern zu stapeln.

Insbesondere weisen die Ringe unterschiedliche Innen- und Außendurchmesser auf. Gemäß einer bevorzugten Ausgestaltung der Erfindung ist die Stapelhilfe zum Stapeln einer ersten Gruppe von Ringen mit einem ersten Durchmesser und einer zweiten Gruppe von Ringen mit einem zweiten Durchmesser vorgesehen, die abwechselnd übereinandergeschichtet werden. Insbesondere kann der Innendurchmesser der großen Ringe in etwa dem Außendurchmesser der kleinen Ringe entsprechen. Eine derartige Vorgabe ergibt sich beispielsweise dann, wenn mit der Stapelhilfe die Innenringe und die Außenringe eines Großwälzlagers vor der Montage von Wälzkörpern gestapelt und transportiert werden.

Um die Ringe übereinander stapeln zu können, werden zwischen zwei aufeinanderfolgenden Ringen mehrere Stapelhilfen angeordnet. Zweckmäßigerweise sind zumindest drei Stapelhilfen um den Umfang verteilt angeordnet, um eine gleichmäßige Auflage und Zentrierung zu erreichen und des Weiteren auch ein Verkippen der aufeinanderliegenden Ringe zu verhindern.

Die beiden Anschlagplatten stehen vorzugsweise in etwa rechtwinklig oder mit einer geringen Abweichung von einem rechten Winkel von der Grundplatte ab. Vorzugsweise beträgt der Innenwinkel an jedem der beiden Anlagewinkel zumindest 90°, damit eine kippfreie und gleichmäßige Anlage an den Ringen ermöglicht wird. Grundsätzlich kann der Innenwinkel der Anlagewinkel auch etwas größer als 90° sein, damit bei dem Übereinanderstapeln mehrerer Ringe eine gewisse Zentrierungswirkung erreicht wird.

Gemäß einer besonders bevorzugten Ausgestaltung der Erfindung beträgt der Innenwinkel an einem Anlagewinkel genau 90°, wobei für das Aufeinanderstapeln zunächst die Stapelhilfe mit diesem Anlagewinkel auf den unteren Ring aufgelegt wird, so dass dann nach oben der andere Anlagewinkel freiliegt, der um mehr als 90° geöffnet ist und so einen nachfolgenden Ring bei dem Auflegen zentriert. Vorzugsweise ist die Form der Stapelhilfe derart auf die Abmessungen der Ringe abgestimmt, dass im gestapelten Zustand kein oder nur noch ein geringes Spiel in radialer Richtung vorliegt.

Wie nachfolgend noch im Detail beschrieben wird, erfolgt die Anordnung der Stapelhilfen üblicherweise derart, dass jede Stapelhilfe auf der einen Seite an dem Innendurchmesser des dortigen Ringes und an der gegenüberliegenden Seite an dem Außendurchmesser des benachbarten Ringes anliegt. Durch eine solche Anordnung kann mit einfachen Mitteln eine zuverlässige Fixierung und Zentrierung erreicht werden. Während die Ringe damit in radialer Richtung gesichert sind, können diese wieder leicht nach oben abgenommen werden, sofern keine zusätzliche Sicherung mit Spanngurten oder dergleichen vorgesehen ist. Mit entsprechenden Sicherungen kann ein kompakter Stapel erzeugt werden, der nicht nur liegend sondern auch schräg oder - bei einer zusätzlichen Sicherung - sogar hochkant stehend transportiert werden kann.

Um eine hohe Belastbarkeit und Widerstandsfähigkeit zu gewährleisten, ist die Stapelhilfe gemäß einer bevorzugten Ausgestaltung der Erfindung aus Metall gebildet, wobei die Grundplatte, die erste Anschlagplatte und die zweite Anschlagplatte auf besonders einfache Weise aus Flacheisen gebildet sein können. Besonders bevorzugt sind die erste Anschlagplatte und die zweite Anschlagplatte an der Grundplatte angeschweißt. Grundsätzlich sind aber auch andere Befestigungen, beispielsweise durch Schrauben, möglich.

Erfindungsgemäß sind die beiden von der Grundplatte und jeweils einer Anschlagplatte gebildeten Anlagewinkel diagonal gegenüberliegend angeordnet, so dass an jeder Seite der Grundplatte noch ein freier Abschnitt neben dem Anlagewinkel verbleibt. An diesem freien Abschnitt kann eine Diagonalstrebe angeordnet werden, welche einerseits als Handgriff genutzt werden kann und andererseits eine zusätzliche Verstärkung der Stapelhilfe bewirkt. Vorzugsweise ist zumindest zwischen einer dem zweiten Anlagewinkel abgewandten Seite der zweiten Anschlagplatte und der Grundplatte eine Diagonalstrebe eingesetzt. Um eine möglichst einfache Herstellung zu erlauben, kann als Diagonalstrebe ein gerader Stab oder ein gerades Rohr vorgesehen sein, wobei eine Diagonalstrebe aus Metall an die Grundplatte und die zugeordnete Anschlagplatte angeschweißt werden kann.

Um die übereinander zu stapelnden Ringe vor mechanischen Beschädigungen zu schützen, ist gemäß einer bevorzugten Ausgestaltung der Erfindung an Anlageflächen der Anlagewinkel jeweils eine Schutzschicht aus Kunststoff angeordnet. Insbesondere können an den Schenkeln der Anlagewinkel Kunststoffplatten befestigt, beispielsweise angeschraubt sein. Abhängig von den mechanischen Anforderungen kommen unterschiedliche Kunststoffmaterialen in Betracht, wobei besonders bevorzugt ein besonders widerstandsfähiger und verschleißfester Kunststoff eingesetzt wird. Geeignet ist beispielsweise eine Schutzschicht aus Polyamid, welches mit einer Faserverstärkung, insbesondere mit Glasfasern versehen ist. Darüber hinaus kommen auch weitere thermoplastische Kunststoffe oder duroplastische Kunststoff wie Hartgummi mit oder ohne Faserverstärkung in Betracht.

Wie zuvor erläutert, ist die Stapelhilfe insbesondere zum Stapeln von Innenringen und Außenringen von Großwälzlagern vorgesehen. Wenn bei einer solchen Anwendung oder auch bei dem Stapeln anderer Ringe der Außendurchmesser des Innenrings bzw. des kleineren Ringes dem Innendurchmesser des Außenringes bzw. des größeren Ringes entspricht, sind die beiden Anschlagplatten an der Grundplatte in etwa einander gegenüberliegend angeordnet. Insbesondere beträgt dann entlang der Längsrichtung der Grundplatte der Abstand zwischen der ersten Anschlagplatte und der zweiten Anschlagplatte weniger als 10% der Länge der Grundplatte.

Für das Stapeln von Großwälzlagerringen muss die Stapelhilfe eine ausreichende Stabilität und Festigkeit aufweisen. Hierzu kann für die Grundplatte beispielsweise ein Flacheisen eingesetzt werden, welches eine Dicke zwischen 10 und 30 mm, eine Länge zwischen 200 und 400 mm und eine Breite zwischen 40 und 80 mm aufweist. Die Anschlagplatten sind zweckmäßigerweise genau oder in etwa so breit wie die Grundplatte. Häufig ist eine etwas geringere Dicke der Anschlagplatten ausreichend, wobei diese beispielsweise eine Dicke zwischen 8 mm und 15 mm aufweisen können. Die Länge der Anschlagplatten kann beispielsweise zwischen 100 und 200 mm betragen.

Um auf besonders einfache Weise die Befestigung einer Schutzschicht aus Kunststoff zu ermöglichen, können die Grundplatte sowie die Anschlagplatten entweder Gewindebohrungen oder Durchgangsbohrungen aufweisen.

Wenn die Ringe übereinanderliegend gestapelt und transportiert werden, ist die Grundplatte horizontal ausgerichtet. Entsprechend müssen auch die Gewichtskräfte durch die Grundplatte und die optional darauf vorgesehenen Schutzschichten aus Kunststoff aufgenommen werden. Es kann deshalb zweckmäßig sein, die Schutzschichten aus Kunststoff an den Anlageflächen der Grundplatte dicker zu gestalten als die Schutzschichten an den Anschlagplatten. So kann die Dicke der Schutzschicht an der Grundplatte beispielsweise zwischen 10 und 20 mm betragen, während an den Anschlagplatten auch eine geringere Dicke von beispielsweise zwischen 4 und 10 mm ausreichend sein kann.

Gegenstand der Erfindung ist auch ein Verfahren zum Stapeln von Großwälzlagerringen mit unterschiedlichen Durchmessern mit den zuvor beschriebenen Stapelhilfen, wobei sowohl zunächst ein Ring mit kleinem Durchmesser oder ein Ring mit einem großen Durchmesser abgelegt werden kann.

Wenn zunächst ein erster Ring mit einem kleinen Durchmesser abgelegt wird, werden nachfolgend mehrere Stapelhilfen jeweils mit dem ersten Anlagewinkel derart auf den ersten Ring aufgesetzt, dass die erste Anschlagplatte an dem Außenumfang des ersten Ringes angeordnet ist und dass die Grundplatte auf einer Stirnfläche des ersten Ringes aufliegt, wobei nachfolgend ein zweiter Ring mit einem großen Durchmesser derart auf die Stapel aufgelegt wird, dass die zweite Anschlagplatte der Stapelhilfe an einem Innenumfang des zweiten Ringes angeordnet ist und dass eine Stirnfläche des zweiten Ringes auf der Grundplatte der Stapelhilfe aufliegt.

Um dann einen dritten Ring auflegen zu können, der wiederum einen kleinen Durchmesser aufweist, werden zunächst mehrere Stapelhilfen jeweils mit dem ersten Anlagewinkel derart auf den zweiten Ring aufgesetzt, dass die erste Anschlagplatte an dem Innenumfang des zweiten Ringes angeordnet ist und dass die Grundplatte auf einer Stirnfläche des zweiten Ringes aufliegt, wobei dann ein dritter Ring mit einem kleinen Durchmesser derart auf die Stapelhilfen aufgelegt wird, dass die zweite Anschlagplatte der Stapelhilfen an einem Außenumfang des dritten Ringes angeordnet ist und dass eine Stirnfläche des dritten Ringes auf der Grundplatte der Stapelhilfe anliegt. Die Ringe liegen dabei gegebenenfalls über die Schutzschicht aus Kunststoff an der Grundplatte an.

Mit der beschriebenen Verfahrensweise können mehrere Ringe mit großem Durchmesser und mit kleinem Durchmesser wechselweise übereinandergeschichtet werden.

In der gleichen Weise kann bei dem Stapeln auch zunächst mit einem Ring begonnen werden, der einen großen Durchmesser aufweist, wobei sich dann die beschriebene Reihenfolge entsprechend ändert.

Die Erfindung wird im Folgenden anhand einer lediglich ein Ausführungsbeispiel darstellenden Zeichnung erläutert. Es zeigen:
- **Fig. 1**: eine Stapelhilfe für Ringe mit unterschiedlichen Durchmessern in einer Seitenansicht,
- **Fig. 2**: die Stapelhilfe gemäß der Fig. 1 in einer perspektivischen Ansicht und
- **Fig. 3**: ein mit einer Vielzahl von Stapelhilfen gemäß der Fig. 1 und Fig. 2 aufgebauter Stapel von Innen- und Außenringen eines Großwälzlagers.

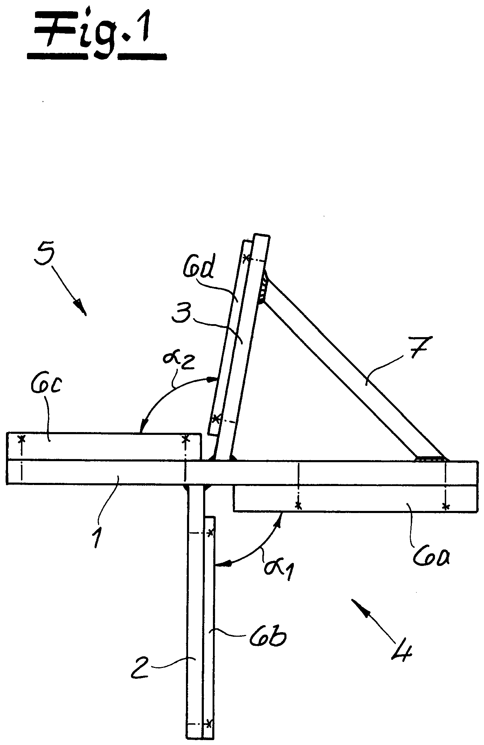

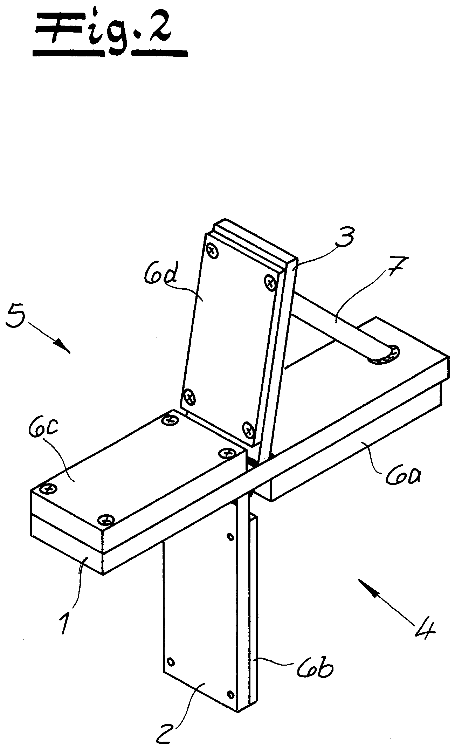

Die Fig. 1 und 2 zeigen eine Stapelhilfe für Ringe mit unterschiedlichen Durchmessern mit einer sich in einer Längsrichtung erstreckenden Grundplatte 1 sowie mit einer ersten Anschlagplatte 2 und einer zweiten Anschlagplatte 3, die an gegenüberliegenden Seiten von der Grundplatte 1 abstehen, wobei die Grundplatte 1 mit der ersten Anschlagplatte 2 einen ersten Anlagewinkel 4 und mit der zweiten Anschlagplatte 3 einen zweiten Anlagewinkel 5 bildet.

Bei einer vergleichenden Betrachtung der Fig. 1 und 2 ist zu erkennen, dass die Grundplatte 1 sowie die Anschlagplatten 2, 3 jeweils von einem Flacheisen gebildet und miteinander verschweißt sind. Die Anlageflächen der Anlagewinkel 4, 5 sind jeweils mit einer Schutzschicht 6a, 6b, 6c, 6d aus Kunststoff versehen, die an dem jeweiligen Schenkel mit der Grundplatte 1 bzw. einer der Anschlagplatten 2, 3 verschraubt sind. Es ist des Weiteren zu erkennen, dass die erste Anschlagplatte 2 in einem rechten Winkel von der Grundplatte 1 absteht, so dass sich für den ersten Anlagewinkel 4 ein Innenwinkel *α*₁ von 90° ergibt. Die zweite Anschlagplatte 3 ist dagegen um 10° gegenüber einer senkrechten Anordnung verkippt, so dass sich für den zweiten Anlagewinkel 5 ein Innenwinkel *α*₂ von 100° ergibt. Der zweite Anlagewinkel 5 ist somit nach oben geöffnet, wodurch bei der Benutzung der dargestellten Stapelhilfe eine Zentrierung der aufeinander aufgelegten Ringe mit unterschiedlichem Durchmesser erreicht wird.

Zwischen einer dem zweiten Anlagewinkel 5 abgewandten Seite der zweiten Anschlagplatte 3 und der Grundplatte 1 ist eine Diagonalstrebe 7 vorgesehen, wobei es sich um einen geraden Stab oder ein gerades Rohr handelt. Die Diagonalstrebe 7 ist mit der zweiten Anschlagplatte 3 sowie der Grundplatte 1 verschweißt und kann zur besseren Handhabung als Handgriff genutzt werden. Des Weiteren bewirkt die Diagonalstrebe 7 auch eine Stabilisierung der zweiten Anschlagplatte 3. Grundsätzlich kann eine solche Diagonalstrebe auch gegenüberliegend zwischen der ersten Anschlagplatte 2 und der Grundplatte 1 vorgesehen sein.

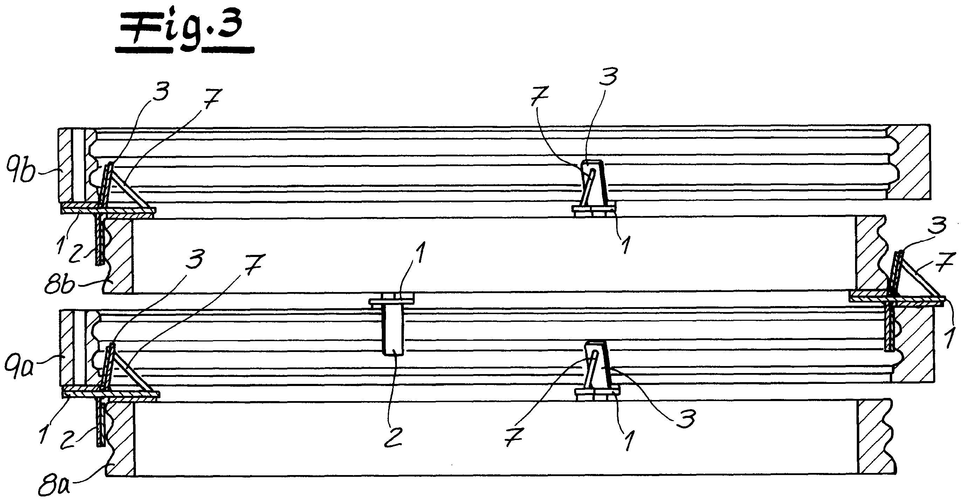

Die Fig. 3 zeigt ein Stapel von Innenringen 8a, 8b und Außenringen 9a, 9b eines Großwälzlagers, wobei der Außendurchmesser der Innenringe 8a, 8b dem Innendurchmesser der Außenringe 9a, 9b entspricht. Des Weiteren sind zwischen den wechselweise in dem Stapel aufeinanderfolgenden Innenringen 8a, 8b und Außenringen 9a, 9b jeweils zumindest drei der zuvor beschriebenen Stapelhilfen angeordnet. Exemplarisch zeigt die Fig. 3 einen Stapel, bei dem als unterstes Element ein Innenring 8a vorgesehen ist, wobei stattdessen auch ein Außenring 9a als unterstes Element des Stapels vorgesehen sein kann.

Bei dem Übereinanderstapeln der Innenringe 8a, 8b und Außenringe 9a, 9b wird zunächst ein erster Innenring 8a abgelegt, wobei mehrere, vorzugsweise zumindest drei Stapelhilfen jeweils mit dem ersten Anlagewinkel 4 derart auf den ersten Innenring 8a aufgesetzt werden, dass die erste Anschlagplatte 2 an dem Außenumfang des ersten Innenringes 8a angeordnet ist und dass die Grundplatte 1 über die zugeordnete Schutzschicht 6a auf einer Stirnfläche des ersten Innenringes 8a aufliegt. Da der erste Anlagewinkel 4 einen Innenwinkel 1 von *α*₁ von genau 90° aufweist, liegen die Stapelhilfen zuverlässig und kippfest auf dem ersten Innenring 8a auf, bevor der erste Außenring 9a von oben aufgesetzt wird. Mit Hilfe der Diagonalstrebe 7 als Handgriff ist auch eine besonders einfache Positionierung der Stapelhilfen möglich.

Wenn nachfolgend der erste Außenring 9a von oben an den zweiten Anlagewinkel 5 der Stapelhilfen aufgelegt wird, ergibt sich der Vorteil, dass der zweite Anlagewinkel 5 der Stapelhilfen einen Innenwinkel *α*₂ von mehr als 90°, beispielsweise 100° aufweist. Es ist deshalb nicht notwendig, den ersten Außenring 9a exakt zu positionieren. Vielmehr erfolgt durch die leichte Schrägstellung der zweiten Anschlagplatte 3 eine automatische Zentrierung bei dem Absetzen des ersten Außenringes 9a.

Um sodann den zweiten Innenring 8b auflegen zu können, werden die ersten Anlagewinkel 4 von weiteren Stapelhilfen an dem Innenumfang des Außenringes 9a angeordnet, wobei die erste Anlageplatte 2 dieser Stapelhilfen an den Innenumfang des ersten Außenringes 9a angeordnet ist und wobei die Grundplatte 1 über die entsprechende Schutzschicht 6a auf einer Stirnfläche des ersten Außenringes 9a aufliegt.

Nachfolgend können dann in gleicher Weise weitere Innenringe 8b und Außenringe 9b aufgelegt werden.

Da die Innenringe 8a, 8b an ihrem Außenumfang und die Außenringe 9a, 9b an ihrem Innenumfang gehalten sind, können die übereinander gestapelten Ringe gegeneinander nicht verrutschen. Das Unfall- und Verletzungsrisiko ist dabei minimiert. Durch die Stapelhilfen kann auch eine gleichmäßige Kraftverteilung erreicht werden.

## Patentansprüche

1. Stapelhilfe für Ringe mit unterschiedlichen Durchmessern mit einer sich in einer Längsrichtung erstreckenden Grundplatte (1), einer ersten Anschlagplatte (2), die von einer ersten Seite der Grundplatte (1) absteht, und einer zweiten Anschlagplatte (3), die von einer der ersten Seite gegenüberliegenden zweiten Seite der Grundplatte (1) absteht, wobei die Grundplatte (1) mit der ersten Anschlagplatte (2) einen ersten Anlagewinkel (4) für einen ersten Ring und mit der zweiten Anschlagplatte (3) einen zweiten Anlagewinkel (5) für einen zweiten Ring bildet und wobei die Anlagewinkel (4, 5) an der Grundplatte(1) diagonal gegenüberliegend angeordnet sind.

2. Stapelhilfe nach Anspruch 1, wobei der erste Anlagewinkel (4) und der zweite Anlagewinkel (5), jeweils einen Innenwinkel (α₁, α₂) zwischen 90° und 110° aufweisen.

3. Stapelhilfe nach Anspruch 1 oder 2, wobei die Grundplatte (1), die erste Anschlagplatte (2) und die zweite Anschlagplatte (3) aus Flacheisen gebildet sind.

4. Stapelhilfe nach einem der Ansprüche 1 bis 3, wobei die erste Anschlagplatte (2) und die zweite Anschlagplatte (3) an die Grundplatte (1) angeschweißt sind.

5. Stapelhilfe nach einem der Ansprüche 1 bis 4, wobei entlang der Längsrichtung der Abstand zwischen der ersten Anschlagplatte (2) und der zweiten Anschlagplatte (3) weniger als 10% der Länge der Grundplatte (1) beträgt.

6. Stapelhilfe nach einem der Ansprüche 1 bis 5, wobei zwischen einer dem zweiten Anlagewinkel (5) abgewandten Seite der zweiten Anschlagplatte (3) und der Grundplatte (1) eine Diagonalstrebe (7) eingesetzt ist.

7. Stapelhilfe nach Anspruch 6, wobei die Diagonalstrebe (7) von einem geraden Stab oder Rohr gebildet ist.

8. Stapelhilfe nach einem der Ansprüche 1 bis 7, wobei an Anlageflächen der Anlagewinkel (4, 5) jeweils eine Schutzschicht (6a, 6b, 6c, 6d) aus Kunststoff angeordnet ist.

9. Stapelhilfe nach Anspruch 8, wobei die Schutzschichten (6a, 6b, 6c, 6d) aus Kunststoff mit der Grundplatte (1) bzw. der zugeordneten Anschlagplatte (2, 3) verschraubt sind.

10. Verfahren zum Stapeln von Großwälzlagerringen mit unterschiedlichen Durchmessern mit Stapelhilfen nach einem der Ansprüche 1 bis 9, wobei nacheinander ein erster Ring mit einem kleinen Durchmesser abgelegt wird,
mehrere Stapelhilfen mit dem ersten Anlagewinkel (4) derart auf den ersten Ring aufgesetzt werden, dass die erste Anschlagplatte (2) an dem Außenumfang des ersten Ringes angeordnet ist und dass die Grundplatte (1) auf einer Stirnfläche des ersten Ringes aufliegt, und
ein zweiter Ring mit einem größeren Durchmesser derart auf die Stapelhilfen aufgelegt wird, dass die zweite Anschlagplatte (3) der Stapelhilfen an einem Innenumfang des zweiten Ringes angeordnet ist und dass eine Stirnfläche des zweiten Ringes auf der Grundplatte (1) der Stapelhilfen aufliegt.

11. Verfahren zum Stapeln von Großwälzlagerringen unterschiedlichen Durchmessern mit Stapelhilfen nach einem der Ansprüche 1 bis 9, wobei nacheinander
ein zweiter Ring mit einem großen Durchmesser abgelegt wird,
mehrere Stapelhilfen jeweils mit dem ersten Anlagewinkel (4) derart auf den zweiten Ring aufgesetzt werden, dass die erste Anschlagplatte (2) an dem Innenumfang des zweiten Ringes angeordnet ist und dass die Grundplatte (1) auf einer Stirnfläche des zweiten Ringes aufliegt, und ein dritter Ring mit einem kleineren Durchmesser derart auf die Stapelhilfen aufgelegt wird, dass die zweite Anschlagplatte (3) der Stapelhilfen an einem Außenumfang des dritten Ringes angeordnet ist und dass eine Stirnfläche des dritten Ringes auf der Grundplatte (1) der Stapelhilfen aufliegt.

## Claims

1. Stacking aid for rings with different diameters, with a baseplate (1) extending in a longitudinal direction, a first stop plate (2) which protrudes from a first side of the baseplate (1) and a second stop plate (3) which protrudes from a second side of the baseplate (1), which side is opposite the first side, wherein the baseplate (1) together with the first stop plate (2) forms a first bearing bracket (4) for a first ring and together with the second stop plate (3) forms a second bearing bracket (5) for a second ring, and wherein the bearing brackets (4, 5) are arranged diagonally opposite each other on the baseplate (1).

2. Stacking aid according to Claim 1, wherein the first bearing bracket (4) and the second bearing bracket (5) respectively have an interior angle (α₁, α₂) of between 90° and 110°.

3. Stacking aid according to Claim 1 or 2, wherein the baseplate (1), the first stop plate (2) and the second stop plate (3) are formed from flat steel.

4. Stacking aid according to one of Claims 1 to 3, wherein the first stop plate (2) and the second stop plate (3) are welded onto the baseplate (1).

5. Stacking aid according to one of Claims 1 to 4, wherein the distance in the longitudinal direction between the first stop plate (2) and the second stop plate (3) is less than 10% of the length of the baseplate (1).

6. Stacking aid according to one of Claims 1 to 5, wherein a diagonal strut (7) is inserted between a side of the second stop plate (3) that faces away from the second bearing bracket (5) and the baseplate (1).

7. Stacking aid according to Claim 6, wherein the diagonal strut (7) is formed from a rectilinear rod or tube.

8. Stacking aid according to one of Claims 1 to 7, wherein a respective protective layer (6a, 6b, 6c, 6d) composed of plastic is arranged on bearing surfaces of the bearing brackets (4, 5).

9. Stacking aid according to Claim 8, wherein the protective layers (6a, 6b, 6c, 6d) composed of plastic are screwed to the baseplate (1) or to the associated stop plate (2, 3).

10. Method for stacking large rolling bearing rings with different diameters, with stacking aids according to one of Claims 1 to 9, wherein, successively, a first ring with a small diameter is deposited,
a plurality of stacking aids with the first bearing bracket (4) are placed onto the first ring in such a manner that the first stop plate (2) is arranged on the outer circumference of the first ring, and that the baseplate (1) rests on an end surface of the first ring, and
a second ring with a larger diameter is put onto the stacking aid in such a manner that the second stop plate (3) of the stacking aids is arranged on an inner circumference of the second ring, and that an end surface of the second ring rests on the baseplate (1) of the stacking aids.

11. Method for stacking large rolling bearing rings of different diameters, with stacking aids according to one of Claims 1 to 9, wherein, successively,
a second ring with a large diameter is deposited,
a plurality of stacking aids each with the first bearing bracket (4) are placed onto the second ring in such a manner that the first stop plate (2) is arranged on the inner circumference of the second ring, and that the baseplate (1) rests on an end surface of the second ring, and
a third ring with a smaller diameter is put onto the stacking aids in such a manner that the second stop plate (3) of the stacking aids is arranged on an outer circumference of the third ring, and that an end surface of the third ring rests on the baseplate (1) of the stacking aids.

## Revendications

1. Accessoire d'empilement pour anneaux de différents diamètres, présentant une plaque de base (1) qui s'étend dans le sens de la longueur, une première plaque de butée (2) qui déborde d'un premier côté de la plaque de base (1) et une deuxième plaque de butée (3) qui déborde d'un deuxième côté de la plaque de base (1), opposé au premier côté,
la plaque de base (1) formant avec la première plaque de butée (2) un premier angle de pose (4) pour un premier anneau et avec la deuxième plaque de butée (3) un deuxième angle de pose (5) pour un deuxième anneau, les angles de pose (4, 5) étant disposés en position diagonalement opposée sur la plaque de base (1).

2. Accessoire d'empilement selon la revendication 1, dans lequel le premier angle de pose (4) et le deuxième angle de pose (5) présentent chacun un angle intérieur (α₁, α₂) compris entre 90° et 110°.

3. Accessoire d'empilement selon les revendications 1 ou 2, dans lequel la plaque de base (1), la première plaque de butée (2) et la deuxième plaque de butée (3) sont formées de fers plats.

4. Accessoire d'empilement selon l'une des revendications 1 à 3, dans lequel la première plaque de butée (2) et la deuxième plaque de butée (3) sont soudées sur la plaque de base (1).

5. Accessoire d'empilement selon l'une des revendications 1 à 4, dans lequel la distance entre la première plaque de butée (2) et la deuxième plaque de butée (3) dans le sens de la longueur représente moins de 10 % de la longueur de la plaque de base (1).j

6. Accessoire d'empilement selon l'une des revendications 1 à 5, dans lequel un montant diagonal (7) est inséré entre un côté de la deuxième plaque de butée (3) non tourné vers le deuxième angle de butée (5) et la plaque de base (1).

7. Accessoire d'empilement selon la revendication 6, dans lequel le montant diagonal (7) est formé d'un barreau ou d'un tube rectilignes.

8. Accessoire d'empilement selon l'une des revendications 1 à 7, dans lequel une couche de protection (6a, 6b, 6c, 6d) en matière synthétique est disposée sur les surfaces de pose des angles de pose (4, 5).

9. Accessoire d'empilement selon la revendication 8, dans lequel les couches de protection (6a, 6b, 6c, 6d) en matière synthétique sont vissées sur la plaque de base (1) ou sur les plaques de butée (2, 3) associées.

10. Procédé d'empilement d'anneaux de montage de gros cylindres présentant différents diamètres à l'aide d'accessoires d'empilement selon l'une des revendications 1 à 9, dans lequel un premier anneau de petit diamètre est d'abord placé,
plusieurs accessoires d'empilement présentant le premier angle de pose (4) sont placés sur le premier anneau de telle sorte que la première plaque de butée (2) soit disposée à la périphérie extérieure du premier anneau et que la plaque de base (1) repose sur une surface frontale du premier anneau et
un deuxième anneau de plus grand diamètre est placé sur les auxiliaires d'empilement de telle sorte que la deuxième plaque de butée (3) des accessoires d'empilement soit disposée sur la périphérie intérieure du premier anneau et que la surface frontale du deuxième anneau repose sur la plaque de base (1) de l'accessoire d'empilement.

11. Procédé d'empilement d'anneaux de montage de gros cylindres présentant différents diamètres à l'aide d'accessoires d'empilement selon l'une des revendications 1 à 9, dans lequel
un premier anneau de grand diamètre est d'abord déposé,
plusieurs accessoires d'empilement présentant le premier angle de pose (4) sont placés sur le premier anneau de telle sorte que la première plaque de butée (2) soit disposée à la périphérie intérieure du deuxième anneau et que la plaque de base (1) repose sur une surface frontale du deuxième anneau et
un troisième anneau de plus petit diamètre est placé sur les accessoires d'empilement de telle sorte que la deuxième plaque de butée (3) de l'accessoire d'empilement soit disposée sur la périphérie extérieure du troisième anneau et que la surface frontale du troisième anneau repose sur la plaque de base (1) de l'accessoire d'empilement.
